Europäisches Patentamt

European Patent Office

Office européen des brevets

(11) Veröffentlichungsnummer : **0 303 607**
**B1**

(12) **EUROPÄISCHE PATENTSCHRIFT**

(45) Veröffentlichungstag der Patentschrift :
03.01.90

(51) Int. Cl.⁵ : **H 01 B   1/24**

(21) Anmeldenummer : 87902500.5

(22) Anmeldetag : 16.04.87

(86) Internationale Anmeldenummer :
PCT/EP 87/00206

(87) Internationale Veröffentlichungsnummer :
WO/8706759 (05.11.87 Gazette 87/24)

(54) ELEKTRISCH LEITFÄHIGES KUNSTSTOFFMATERIAL UND VERFAHREN ZU SEINER HERSTELLUNG.

(30) Priorität : 23.04.86 DE 3613701

(43) Veröffentlichungstag der Anmeldung :
22.02.89 Patentblatt 89/08

(45) Bekanntmachung des Hinweises auf die Patenterteilung : 03.01.90 Patentblatt 90/01

(84) Benannte Vertragsstaaten :
AT BE CH DE FR GB IT LI LU NL SE

(56) Entgegenhaltungen :
Erdöl und Kohle, Erdgas, Petrochimie, vol.38, issue
11, November 1985 (Industrieverlag von Hernhausen
KG, Leinfelden-Echterdingen, DE), J.W. Stadelhofer
et al., "Mesophasen aus hochkondensierten Aromaten", s. Seiten 503-509 (in der Anmeldung erwähnt)

(73) Patentinhaber : Bergwerksverband GmbH
Franz-Fischer-Weg 61
D-4300 Essen 13 (DE)

DIDIER ENGINEERING GmbH
Alfredstrasse 28 Postfach 10 09 45
D-4300 Essen 1 (DE)

(72) Erfinder : ROMEY, Ingo
Sandkamp 25
D-4224 Hünxe 2 (DE)
Erfinder : GEIER, Rudolf
Isabellastr. 4
D-4300 Essen (DE)

EP 0 303 607 B1

## Beschreibung

Die Erfindung betrifft ein elektrisch leitfähiges Kunststoffmaterial und ein Verfahren zu seiner Herstellung.

Es ist bekannt, Kunststoffe durch Füllmaterialien oder chemische Zusätze elektrisch leitfähig zu machen.

D.M. Bigg und E.J. Bradbury (Organic Coatings and Plastic Chemistry, 43, 746-752, (1980)) untersuchten den Einfluß der Zumischung von Ruß und leitfähigen Fasern auf die Eigenschaften von Kunststoffmaterialien. Dabei ist jedoch eine Zumischung bis ca. 30 % erforderlich. Die Zumischung dieser großen Mengen beeinträchtigt die mechanischen Eigenschaften des Kunststoffmaterials.

Die Veröffentlichung von G. Wegener (Angewandte Chemie 93, 352-371, (1981)) gibt einen Überblick über das Einbinden von chemischen Zusätzen in Kunststoffmoleküle (Dotierung). Bei diesen leifähigen Kunststoffen ist es von Nachteil, daß die Leitfähigkeit innerhalb kurzer Zeit geringer wird (G. Wegener, Seite 369).

Der Erfindung liegt die Aufgabe zugrunde, ein elektrisch leitfähiges Kunststoffmaterial bereitzustellen und ein Verfahren zu seiner Herstellung zu schaffen, bei dem die vorgenannten Nachteile vermieden werden.

Die Aufgabe wird erfindungsgemäß dadurch gelöst, daß in einem Kunststoff ein dreidimensional vernetzter, elektrisch leitfähiger Festkörper aus einer flüssigkristallinen Struktur (Mesophase) enthalten ist.

Bei der Herstellung des leitfähigen Kunststoffmaterials werden beide Komponenten, d. h. die Mesophase und ein Kunststoff gemeinsam oder getrennt aufgeschmolzen und innig miteinander vermischt. Das schmelzflüssige Gemisch wird einer mechanischen Beanspruchung unterworfen und formatisiert. Gemäß Anspruch 3 kann das schmelzfähige Gemisch einer Wärmebehandlung unterzogen werden.

Die Mesophasen werden durch thermische Behandlung von hochkondensierten Aromaten, beispielsweise Steinkohlenteerpechen, Rückständen aus Mineralölverarbeitung bzw. Kunststoffrückständen in bekannter Weise hergestellt (Erdöl u. Kohle, Bd. 38/11, S. 503-509, (1985)).

Als Kunststoffe können alle Thermoplaste mit Verarbeitungsbereichen über 250 °C, insbesondere Polyamide, Polyester und hochschmelzendes Polyethylen, Polypropylen und Polyvinylchlorid sowie Polystyrol eingesetzt werden.

Bei weitgehender Übereinstimmung der Verarbeitungsbereiche der Mesophase und des Kunststoffes erfolgt die homogene Vermischung der beiden Komponenten bevorzugt in einer kontinuierlich arbeitenden Misch- und Knetmaschine, z. B. in einer Doppelschneckenmaschine. Der Kunststoff wird zunächst in der Doppelschneckenmaschine aufgeschmolzen. Um eine möglichst homogene Mischung zu erhalten, wird die Mesophase in Festform an verschiedenen Stellen in die Doppelschneckenmaschine eindosiert. Das Aufschmelzen und Vermischen der Mesophase mit dem Kunststoff erfolgt in einer entsprechend lang ausgelegten Mischstrecke der Maschine. Nach homogener Vermischung beider Komponenten wird die Umwandlung der Mesophase in einen Festkörper mit hoher elektrischer Leitfähigkeit im vorderen Teil der Mischmaschine, beispielsweise durch Anordnung entsprechender Knet- und Scherelemente vorgenommen. Eventuell entstehende Gase können durch eine Vakuumabsaugung abgezogen werden.

Bei unterschiedlichen Verarbeitungsbereichen von Mesophase und Kunststoff werden beide Komponenten getrennt aufgeschmolzen und anschließend in schmelzflüssigem Zustand miteinander in der Doppelschneckenmaschine vermischt. Falls ein Viskositätsabbau des eingesetzten Kunststoffes auftritt, kann dies durch das Einstellen einer anderen Ausgangsviskosität des Kunststoffes kompensiert werden. Nach homogener Vermischung erfolgt die Umwandlung der Mesophase in einen Festkörper mit hoher elektrischer Leitfähigkeit durch Energiezufuhr in das Gemisch, z. B. durch Scher-Beanspruchung und-/oder durch Einleitung von Wärme.

Das elektrisch leitfähige Kunststoffmaterial wird formatisiert, z. B. zu einem Granulat verarbeitet. Dieses Granulat kann mit den bekannten Verfahren der kunststoffverarbeitenden Industrie zu Formkörpern oder -teilen weiterverarbeitet werden.

Die hergestellten leitfähigen Formteile lassen sich in Bereichen einsetzen, in denen Aufladungen vermieden werden sollen, z. B. Gehäuse, etwa für Elektrogeräte, Computerteile bzw. Fasermaterialien für Teppichböden.

Die Erfindung wird nachfolgend, anhand der Zeichnung und der Beispiele näher beschrieben.

Die Zeichnung zeigt in der

Fig. 1 eine schematische Darstellung einer Apparatur zur Herstellung von leitfähigen Kunststoffen, bei denen die Mesophase in Festform zugegeben wird, und in

Fig. 2 eine schematische Darstellung einer Apparatur, in der die beiden Komponenten getrennt aufgeschmolzen werden.

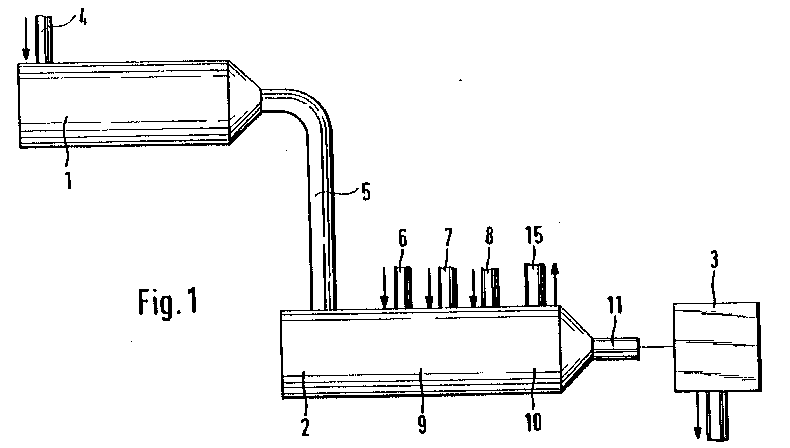

Aus Fig. 1 geht hervor, daß die Apparatur aus zwei beheizbaren Doppelschneckenmaschinen (1, 2) und einem Granulator (3) besteht. In der Doppelschneckenmaschine (1) wird der Kunststoff mit der Zugabeeinrichtung (4) eindosiert und plastifiziert. Die schmelzflüssige Kunststoffkomponente wird über eine Leitung (5) in die Doppelschneckenmaschine (2) eindosiert. In die Mischzone (9) der Doppelschneckenmaschine (2) wird mit den Zugabeeinrichtungen (6, 7, 8) Mesophase in Festform eingespeist. Durch die Temperatur der Kunststoffschmelze und der Mischmaschine wird die Mesophase schmelzflüssig gemacht und vermischt sich homogen mit der Kunststoffschmelze. In der Scher-Zone (10) erfolgt die Umwandlung der Flüssigkristalle durch Kneten und Scherung und/oder Temperaturerhöhung in einen Festkörper mit hoher elektrischer Leitfähigkeit. Die Doppelschneckenmaschine (2) ist mit einem Vakuumanschluß (15) zur Entgasung versehen. Am Austrag (11) der Doppelschneckenmaschine (2) ist der Granulator (3) angebracht, in dem ein leitfähiges Kunststoffgranulat für die technische Weiterverarbeitung hergestellt wird.

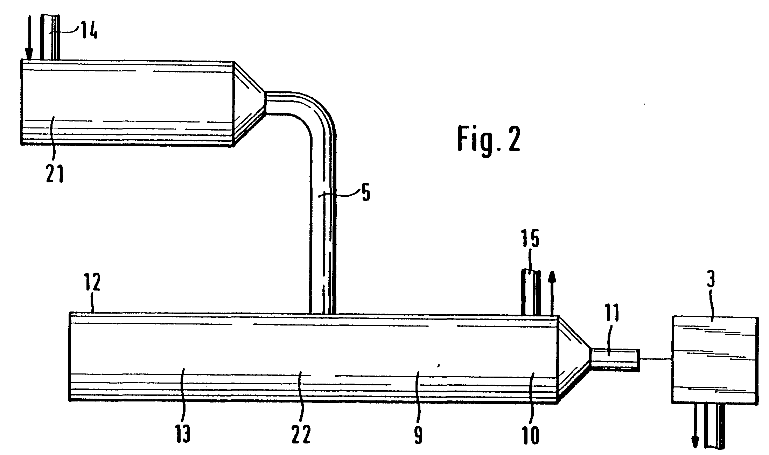

Haben der Kunststoff und die Mesophase unterschiedliche Verarbeitungsbereiche, so erfolgt die Herstellung des elektrisch leitfähigen Kunststoffmaterials in einer Apparatur gemäß Fig. 2. Die Mesophase wird in eine Doppelschneckenmaschine (21) mit der Zugabeeinrichtung (14) eindosiert und zu einer flüssigen Masse aufgeschmolzen. Die Kunststoffkomponente wird über die Zugabeeinrichtung (12) in die Aufschmelzzone (13) der Doppelschneckenmaschine (22) aufgegeben. Über die Leitung (5) wird die Mesophasenschmelze in die Mischzone (9) der Doppelschneckenmaschine (22) eindosiert, in der die homogene Mischung der beiden Komponenten erfolgt. Die Scher-Zone (10) bewirkt die Umwandlung der Mesophase in einen leitfähigen Festkörper. Die Doppelschneckenmaschine (22) ist mit einem Vakuumanschluß (15) zur Entgasung versehen. Durch den Austrag (11) wird das leitfähige Kunststoffmaterial dem Granulator (3) zugeführt.

Beispiel 1

Ein Mineralölrückstand mit einem Erweichungspunkt nach Krämer-Sarnow von 160 bis 170 °C wird ca. 4 Stunden bei 350 °C getempert. Das entstehende Produkt enthält etwa 50 % Mesophase. Durch eine Toluol-Behandlung wird das Restpech entfernt. Die so hergestellte Mesophase hat einen Verarbeitungsbereich von 300-350 °C In einer Apparatur gemäß Fig. 1 wird ein Polyester mit einem Verarbeitungsbereich von 320-350 °C aufgeschmolzen und in die Doppelschneckenmaschine (1) gegeben. In die Doppelschneckenmaschine (2) wird 4 Gew.-% fester Mesophase an den verschiedenen Zugabepunkten (6, 7, 8) eindosiert, in der Mischzone (9) plastifiziert und mit dem Polyester innig vermischt und homogenisiert. In der Scher-Zone erfolgt die Umwandlung der Mesophase in den Festkörper mit hoher Leitfähigkeit. Nach Überführung des leitfähigen Kunststoffmaterials in ein Granulat in dem Granulator (3) wird in einer Spritzgußmaschine ein Formkörper gepreßt. Der spezifische elektrische Widerstand der Formkörper beträgt ca. $10^6$ Ohm cm.

Beispiel 2

Ein gefiltertes, feststoffreies Steinkohlenteerpech mit einem Erweichungspunkt von 150 °C nach Krämer-Sarnow wird ca. 2 h mit Toluol unter Rückfluß extrahiert. Die toluollöslichen Bestandteile werden abgetrennt. Der Extraktionsrückstand hat einen Verarbeitungsbereich von 380-400 °C. In einer Apparatur gemäß Fig. 2 wird die Mesophase (7 % bezogen auf das leitfähige Granulat) in der ersten Doppelschneckenmaschine aufgeschmolzen, in die zweite Doppelschneckenmaschine dosiert und dort mit einem Polyamid 6.6, das bei 320-350 °C in der Aufschmelzzone (13) der Doppelschneckenmaschine (22) bereits plastifiziert wurde, innig miteinander vermischt und homogenisiert. In der Scher-Zone (10) der Doppelschneckenmaschine (22) erfolgt die Umwandlung der Mesophase in einen Festkörper mit hoher Leitfähigkeit durch Knet- und Scher-Beanspruchung. Der leitfähige Kunststoff wird in Granulat überführt und in einer Spritzgußmaschine zu einem Formkörper gepreßt. Der spezifische elektrische Widerstand des Formkörpers beträgt ca. $10^8$ Ohm cm.

## Patentansprüche

1. Elektrisch leitfähiges Kunststoffmaterial, bestehend aus einem Kunststoff, in dem ein dreidimensional vernetzter, elektrisch leitfähiger Festkörper aus einer flüssigkristallinen Struktur (Mesophase) enthalten ist, die durch thermische Behandlung von hochkondensierten Aromaten, beispielsweise Steinkohlenteerpechen, Rückständen aus Mineralölverarbeitung bzw. Kunststoffrückständen, hergestellt worden ist.

2. Verfahren zur Herstellung eines elektrisch leitfähigen Kunststoffmaterials nach Anspruch 1, dadurch gekennzeichnet, daß eine flüssigkristalline Struktur (Mesophase) mit einem Kunststoff in schmelzflüssigem Zustand vermischt wird und das schmelzflüssige Gemisch einer mechanischen Beanspruchung unterworfen und formatisiert wird.

3. Verfahren nach Anspruch 2, dadurch gekennzeichnet, daß das schmelzflüssige Gemisch einer Wärmebehandlung unterzogen wird.

## Claims

1. Electrically conductive synthetic plastics material, consisting of a synthetic plastic in which there is contained a three-dimensional crosslinked electrically conductive solid body made from a fluid-crystalline structure (mesophase), which has been manufactured by means of thermal treatment of highly-condensed aromatics, for example coal tar pitches, residues from mineral oil processing and/or synthetic plastics residues.

2. Process for manufacturing an electrically conductive synthetic plastics material according to claim 1, characterised in that a fluid-crystalline structure (mesophase) is mixed with a synthetic plastic in the molten state, and the molten mixture is subjected to a mechanical stressing and is formatised.

3. Process according to claim 2, characterised in that the molten mixture is subjected to a heat treatment.

## Revendications

1. Matière plastique conductrice de l'électricité, qui se compose d'une matière plastique contenant une substance solide, réticulée dans les trois dimensions, conductrice de l'électricité, d'une structure liquide-cristalline (mésophase), qui a été préparée par le traitement thermique de composés aromatiques fortement condensés, par exemple des brais de houille, des résidus de traitement d' huiles minérales, ou des résidus de matières plastiques.

2. Procédé de préparation d'une matière plastique conductrice de l'électricité selon la revendication 1, caractérisé en ce que l'on mélange une structure cristalline (mésophase) à une matière plastique à l'état liquide fondu et on soumet le mélange liquide fondu à une sollicitation mécanique et on soumet le produit à une mise au format.

3. Procédé selon la revendication 2, caractérisé en ce que l'on soumet le mélange liquide fondu à un traitement thermique.

Fig.1

Fig. 2